# EUROPÄISCHE PATENTSCHRIFT

(11) **EP 1 082 383 B1**
(45) Veröffentlichungstag und Bekanntmachung des Hinweises auf die Patenterteilung: **24.10.2001**
(21) Anmeldenummer: 99913278.0
(22) Anmeldetag: 19.03.1999
(51) Int. Cl.: C08J 9/20, C08F 257/02

(54) **VERFAHREN ZUR HERSTELLUNG WASSEREXPANDIERBARER RECYCLAT ENTHALTENDER STYROLPOLYMERISATE**
METHOD FOR PRODUCING WATER EXPANDABLE STYRENE POLYMERS CONTAINING RECYCLED MATERIAL
PROCEDE DE FABRICATION DE POLYMERES A BASE DE STYRENE EXPANSIBLES A L'EAU ET CONTENANT DES MATIERES RECYCLEES

(30) Priorität: 24.03.1998 DE 19812858
(43) Veröffentlichungstag der Anmeldung: 14.03.2001
(73) Patentinhaber: BASF AKTIENGESELLSCHAFT, 67056 Ludwigshafen (DE)
(72) Erfinder: GLÜCK, Guiscard, D-55129 Mainz (DE); HAHN, Klaus, D-67281 Kirchheim (DE); GELLERT, Roland, D-67434 Neustadt (DE)
(86) Internationale Anmeldenummer: EP9901837
(87) Internationale Veröffentlichungsnummer: WO9948956

(56) Entgegenhaltungen:
- WO-A-96/07694
- WO-A-98/01488
- WO-A-98/01489
- US-A- 5 596 045

## Beschreibung

Die Erfindung betrifft ein Verfahren zur Herstellung wasserexpandierbarer Styrolpolymerisate (WEPS) durch Polymerisation von Styrol in wässriger Suspension, wobei die suspendierten Styroltröpfchen Wasser in feiner Verteilung emulgiert enthalten.

Teilchenförmige expandierbare Styrolpolymerisate (EPS) werden normalerweise hergestellt durch Polymerisation von Styrol in wässriger Suspension in Gegenwart eines flüchtigen organischen Treibmittels. Übliche Treibmittel sind Kohlenwasserstoffe, insbesondere Pentan. Aus Umweltschutzgründen muß bei der Herstellung und Verarbeitung von EPS emittiertes Pentan wieder aufgefangen werden. Dies ist aufwendig und kostenintensiv. Es ist daher sinnvoll, diese organischen Substanzen längerfristig durch unbedenklichere Treibmittel zu ersetzen, beispielsweise durch Wasser.

In einer Dissertation der Universität Eindhoven "Water Expandable Polystyrene" von J.J. Crevecoeur aus dem Jahr 1997 ist ein Verfahren zur Herstellung von WEPS beschrieben, bei dem zunächst Wasser in feiner Verteilung in Styrol mit Hilfe von oberflächenaktiven Substanzen emulgiert, das Styrol bis zu einem Umsatz von 50 % polymerisiert, die Mischung unter Phasenumkehr in Wasser suspendiert und das Styrol schließlich mit Hilfe von Peroxid-Initiatoren auspolymerisiert wird. Als oberflächenaktive Substanzen werden amphiphile Emulgatoren eingesetzt, z.B. Natrium-Bis- (2-ethylhexyl)-sulfosuccinat oder Natrium-Styrolsulfonat oder Blockcopolymere aus Polystyrol-Blöcken und Polystyrolsulfonat-Blöcken. Alle diese Substanzen weisen sowohl einen hydrophilen als auch einen hydrophoben Rest auf und sind daher in der Lage, Wasser in Styrol zu emulgieren.

Dieses Verfahren hat den Nachteil, daß es in zwei Stufen durchgeführt wird: Erst wird Wasser in der Styrol/Polystyrol-Mischung emulgiert, dann wird unter Phasenumkehr die organische Phase in Wasser suspendiert.

Aufgabe der Erfindung war es daher, ein einfacheres, einstufiges Verfahren zur Herstellung von WEPS zu entwickeln.

Diese Aufgabe wird erfindungsgemäß dadurch gelöst, daß die Suspension in Gegenwart von 5 bis 30 Gew.-%, vorzugsweise 10 bis 25 Gew.-% recycliertem Polystyrol-Partikelschaumstoff (EPS-Recyclat) durchgeführt wird.

EPS-Recyclat wird bei der Aufarbeitung von EPS-Schaumstoffen, z.B. von Verpackungs- oder Isoliermaterialien, erhalten. Diese Materialien werden nach einer oberflächlichen Reinigung zerkleinert, z.B. durch Mahlen oder Häckseln, wobei Schaumstoff-Flocken einer Größe im Bereich von 5 bis 50 mm anfallen. Diese Flocken werden gewaschen, getrocknet, kompaktiert und zu Granulat extrudiert. Dieses Granulat wird dann bei dem erfindungsgemäßen Verfahren in Styrol gelöst, und die Lösung wird in Wasser suspendiert und polymerisiert.

EPS-Granulat enthält von der EPS-Herstellung her im allgemeinen 0,1 bis 2, vorzugsweise 0,2 bis 1 Gew.-% Beschichtungsmittel, die auf die EPS-Perlen nach ihrer Herstellung aufgebracht wurden. Bei diesen Beschichtungsmitteln handelt es sich größtenteils um amphiphile Verbindungen, die in der styrolischen Lösung dispergiert oder gelöst sind und im Rahmen der vorliegenden Erfindung als Emulgierhilfsmittel wirken. Beschichtungsmittel sind z.B. Antistatika, wie quartäre Ammoniumalkylsulfonate, aliphatische Sulfonate oder oxalkylierte Ammoniumsalze; Antiverklebungsmittel, wie Metallsalze von Fettsäuren, z.B. Zinkstearat, ferner Fettsäureester und Fettsäureamide; Mittel zur Kühlzeitverkürzung, wie Glycerinester und hydrophobe Ester aus Fettsäuren oder Fettalkoholen, z. B. Glycerinmonostearat oder Tristearylcitrat.

Bei der erfindungsgemäßen Suspensionspolymerisation wird als Monomer bevorzugt Styrol allein eingesetzt. Es kann jedoch zu bis zu 20 % seines Gewichts durch andere ethylenisch ungesättigte Monomere, wie Alkylstyrole, Divinylbenzol, Acrylnitril, 1,1-Diphenylethen oder α-Methylstyrol ersetzt sein.

Bei der Suspensionspolymerisation können die üblichen Hilfsmittel, wie z.B. Suspensionsstabilisatoren, Radikalinitiatoren, Flammschutzmittel, Kettenüberträger, Expandierhilfsmittel, Keimbildner und Weichmacher zugesetzt werden. Es ist vorteilhaft, als Suspensionsstabilisatoren anorganische Pickering-Dispergatoren, z.B. Magnesiumpyrophosphat oder Tricalciumphosphat, in Kombination mit geringen Mengen Alkylsulfonaten einzusetzen. Bevorzugte Flammschutzmittel sind organische Bromverbindungen, z. B. Hexabromcyclododecan, die in Mengen 0,1 bis 2 Gew.-%, bezogen auf die Summe aus Styrol + Recyclat, zugesetzt werden.

Die Suspensionspolymerisation wird zweckmäßigerweise in zwei Temperaturstufen durchgeführt, wobei zwei bei unterschiedlichen Temperaturen zerfallende Peroxid-Initiatoren eingesetzt werden. Zunächst wird die Suspension auf 80° bis 90°C erhitzt, wobei das erste Peroxid, z.B. Dibenzoylperoxid, zerfällt und die Polymerisation einleitet. Dann läßt man die Temperatur langsam auf 100 bis 140°C ansteigen. Dabei zerfällt dann das zweite Peroxid, z.B. Dicumylperoxid oder Di-tert.butylperbenzoat.

Die bei der Suspensionspolymerisation entstandenen WEPS-Partikel enthalten je nach der eingesetzten EPS-Recyclatmenge und deren Gehalt an Beschichtungsmittel 2 bis 20, insbesondere 5 bis 15 Gew.-% Wasser. Ihre Partikelgröße beträgt 0,2 bis 5, vorzugsweise 0,5 bis 2 mm. Sie können mit 110 bis 140°C heißer Luft oder überhitztem Wasserdampf zu Schaumstoffpartikeln geschäumt werden. Ein besonders elegantes Schäumverfahren, welches zu Schaumpartikeln mit sehr niedriger Schüttdichte führt, ist in der Deutschen Patentanmeldung P 198 12 854.1 beschrieben.

Die WEPS-Schaumpartikel können wie herkömmliche EPS-Schaumpartikel zu Schaumstoff-Platten, -Blöcken oder -Formteilen verschweißt werden, die als Isolier- oder Verpackungsmaterialien verwendet werden können.

Die in den Beispielen genannten Prozente beziehen sich auf das Gewicht.

### Beispiel 1

In 14,95 kg Styrol werden 3,70 kg (20 %) recycliertes, granuliertes EPS mit einem Gehalt von 0,6 % Beschichtungsmittel gelöst unter Beimischung von 44,85 g Dicumylperoxid und 7,48 g Dibenzoylperoxid. Die organische Phase wird in 19,5 l vollentsalztes Wasser in einem 50 l Rührkessel eingebracht. Die wäßrige Phase enthält 105,1 g Natriumpyrophosphat und 194,6 g Bittersalz. Man erhitzt die Suspension auf 80°C und gibt 5,26 g Natrium-C₁₅-Alkylsulfonat zu, wobei sich das Suspensionsstabilisatorsystem bildet. Schließlich wird bei 133°C auspolymerisiert. Man erhält ein kompaktes perlförmiges Granulat, welches 12 % Wasser enthält.

Das Granulat wird mit 130°C heißer Luft aufgeschäumt. Dabei expandieren die Perlen auf das 10-fache ihres ursprünglichen Schüttgewichtes von 600 g/l. Die vorgeschäumten Perlen werden anschließend in einem Strom von trockener, 70°C warmer Luft vom Restwasser befreit. Schließlich werden die Perlen in einem konventionellen Vorschäumer für EPS mittels Wasserdampf weiter geschäumt. Nach dreimaligem Schäumen mit Wasserdampf und dazwischenliegender jeweiliger Trocknung von Restwasser erhält man Schaumstoffperlen mit einer Schüttdichte von 10 g/l.

### Beispiel 2

In 14,95 kg Styrol werden 1,66 kg (10 %) recycliertes EPS gelöst unter Beimischung von 44,85 g Dicumylperoxid und 7,48 g Dibenzoylperoxid. Die organische Phase wird in 19,5 l vollentsalztes Wasser in einem 50 l Rührkessel eingebracht. Die wässrige Phase enthält 105,1 g Natriumpyrophosphat und 194,6 g Bittersalz. Man erhitzt die Suspension auf 80°C. Nach 140 Minuten wird 5,26 g Alkylsulfonat zugegeben. Schließlich wird bei 133°C auspolymerisiert. Man erhält ein kompaktes perlförmiges Granulat, welches 7 % Wasser enthält.

Das Granulat wird wie in Beispiel 1 beschrieben, verschäumt.

## Patentansprüche

1. Verfahren zur Herstellung von Wasser als einzigem Treibmittel enthaltenden Styrolpolymerisaten durch Polymerisation von Styrol, gegebenenfalls zusammen mit Comonomeren, in wässriger Suspension, wobei die suspendierten Styroltröpfchen Wasser in feiner Verteilung emulgiert enthalten und ein Emulgierhilfsmittel anwesend ist, **dadurch gekennzeichnet, daß** die Polymerisation in Gegenwart von 5 bis 30 Gew.-% recycliertem Polystyrol-Partikelschaumstoff (EPS-Recyclat) durchgeführt wird.

2. Verfahren nach Anspruch 1, **dadurch gekennzeichnet, daß** das EPS-Recyclat von der EPS-Herstellung her 0,1 bis 2 Gew.-% üblicher Beschichtungsmittel enthält, welche als Emulgierhilfsmittel wirken.

3. Verfahren nach Anspruch 2, **dadurch gekennzeichnet, daß** die Beschichtungsmittel Antistatika, Antiverklebungsmittel und/ oder Mittel zur Verkürzung der Kühlzeit sind.

4. Verfahren nach Anspruch 1, **dadurch gekennzeichnet, daß** das EPS-Recyclat in Styrol gelöst, die Lösung in Wasser suspendiert und dann die Suspensionspolymerisation durchgeführt wird.

5. Verwendung der nach Anspruch 1 hergestellten, 2 bis 20 Gew.-% Wasser enthaltenden, Styrolpolymerisate zur Herstellung von Schaumstoffen.

## Claims

1. A process for preparing styrene polymers comprising water as sole blowing agent by polymerizing styrene, if desired together with comonomers, in aqueous suspension, where the suspended styrene droplets comprise an emulsion of finely divided water, and an emulsifying agent is present, which comprises carrying out the polymerization in the presence of from 5 to 30% by weight of recycled molded polystyrene foam (recycled EPS material).

2. A process as claimed in claim 1, wherein the recycled EPS material comprises from 0.1 to 2% by weight of customary coating agents deriving from preparation of the EPS, and these act as emulsifying agents.

3. A process as claimed in claim 2, wherein the coating agents are antistats, anticoagulants and/or agents for reducing the cooling time.

4. A process as claimed in claim 1, wherein the recycled EPS material is dissolved in styrene, and the solution is suspended in water and then the suspension polymerization is carried out.

5. The use of the styrene polymers comprising from 2 to 20% by weight of water and prepared as claimed in claim 1 for producing foams.

## Revendications

1. Procédé pour la préparation de polymères du styrène contenant de l'eau en tant qu'unique agent porogène par polymérisation du styrène, le cas échéant avec des comonomères, en suspension aqueuse, les gouttelettes de styrène en suspension contenant de l'eau émulsionnée à l'état de fine division, et en présence d'un produit auxiliaire émulsionnant, **caractérisé par le fait que** la polymérisation est réalisée en présence de 5 à 30 % en poids de mousse particulaire de polystyrène recyclée (EPS recyclé).

2. Procédé selon la revendication 1 **caractérisé par le fait que** l'EPS recyclé contient, provenant de la préparation d'EPS, de 0,1 à 2 % en poids de produits de revêtement, qui exercent une fonction de produits auxiliaires émulsionnants.

3. Procédé selon la revendication 2, **caractérisé par le fait que** les produits de revêtement sont des agents antistatiques, des agents anti-adhérence et/ou des additifs servant à écourter la durée de refroidissement.

4. Procédé selon la revendication 1, **caractérisé par le fait que** l'on dissout l'EPS recyclé dans du styrène, on met la solution en suspension dans l'eau puis on procède à la polymérisation en suspension.

5. Utilisation des polymères du styrène préparés selon la revendication 1 et contenant 2 à 20 % en poids d'eau pour la préparation de mousses.
